Europäisches Patentamt

European Patent Office

Office européen des brevets

(11) Publication number: **0 150 684**
**B1**

(12) **EUROPEAN PATENT SPECIFICATION**

(45) Date of publication of patent specification: **15.06.88**

(21) Application number: **84830126.3**

(22) Date of filing: **20.04.84**

(51) Int. Cl.⁴: **E 02 B 3/22,** B 63 B 59/02

(54) **Fender for water vessels.**

(30) Priority: **23.12.83 IT 513783 u**

(43) Date of publication of application:
**07.08.85 Bulletin 85/32**

(45) Publication of the grant of the patent:
**15.06.88 Bulletin 88/24**

(84) Designated Contracting States:
**AT BE CH DE FR GB LI NL SE**

(56) References cited:
**US-A-4 343 258**
**US-A-4 351 257**

(73) Proprietor: **Bortolotti, Vanes**
**Via Balzani, 12**
**I-40069 Zola Predosa (Bologna) (IT)**

(72) Inventor: **Bortolotti, Vanes**
**Via Balzani, 12**
**I-40069 Zola Predosa (Bologna) (IT)**

(74) Representative: **Lanzoni, Luciano**
**c/o BUGNION S.p.A. Via Farini, 37**
**I-40124 Bologna (IT)**

Courier Press, Leamington Spa, England.

## Description

The present invention relates to fenders for water borne vessels.

It is known that a fender is a round or cylinder-shaped protection hung over vessel's sides in order to absorb impacts and avoid possible frictions. Usually round-shaped fenders, more particularly in the form of a drop, are used for big boats and are made of sufficiently stiff material while cylinder-shaped fenders of an elongated form and normally used in small and medium-sized vessels, are usually made of light elastic material (rubber or plastic material) and, for the purpose of reducing prices, have a thin wall and are inflated.

Both first and second types of fenders are hung over vessel's sides by means of lines fixed to the vessel's handrail in use when the vessel has to dock next to other ships. On the contrary, during navigation or when the vessel is not going to moor in a port, that is in the case of anchor-moorings, fenders become unnecessary and bothering if hung overboard so that it is necessary to hoist them onboard in order to arrange them in a fixed position possibly joined together: this is above all necessary when small or medium-sized vessels are concerned as they have a reduced free room.

In any case there is no possibility for all these types of fenders to be fixedly joined together, unless lines (usually the same that keep fenders hung over the vessel's sides) are available to enable their fixing to each other.

The main object of the present invention is therefore to overcome the above mentioned drawbacks by providing a fender of simple construction and suitable to be fixedly attached to the differently shaped handrails of presently existing boats, no lines or fixing ropes being needed. In one embodiment said fenders also exhibit means allowing their fastening to each other.

A further object of the present invention is to be able to produce said fender from an elastic, yielding and above all cheap material.

These objects are achieved by a fender comprising an elongated element characterized in that the element is provided with a first series of first cylindrical housings that extend through the element along chords lying in planes that intersect said element, each of said housings being provided with a corresponding first slit extending in the respective intersecting plane and over the whole length of the housing to bring said housing into communication with the element's outer surface; said element being also provided with at least a second cylindrical housing which extends longitudinally of said element over the whole length thereof, and provided with a second slit extending to the element's outer surface over the whole length of said element.

Further features and advantages will become more apparent from the following detailed description of a preferred embodiment of the fender according to the invention, given hereinafter by way of example only with reference to the accompanying drawings, in which:

Fig. 1 is a side view of the first element of the fender according to the invention;

Fig. 2 is a section taken along line A—A in Fig. 1;

Fig. 3 is a view of the fender itself rotated through 90° with respect to Fig. 1;

Fig. 4 is a front view shown from point B in Fig. 3;

Fig. 5 is a diagrammatic view of the fender applied to a boat in a non-use position;

Fig. 6 shows a possible mutual coupling solution between fenders by a restrained fixing;

Fig. 7 is a side view of a coupling element for use with the fender according to the invention.

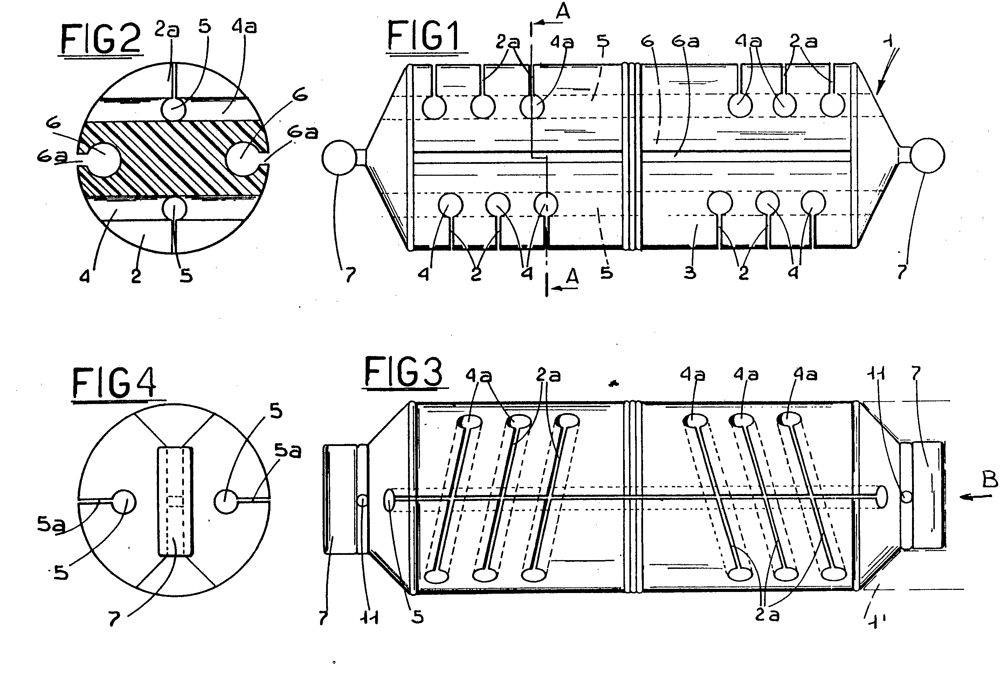

Referring to the drawings, it has been generally indicated at 1 an elongated element forming the fender according to the invention. As shown in Figs. 1 and 3, it has an elongated cylindrical form. Said element is provided with a first series of first cylindrical housings 4 disposed (in the case shown) in sets of three, each set being the mirror image of another with respect to a transverse plane of symmetry dividing said element, said housings being parallel to each other. The cylindrical housings 4 substantially extend along chords lying in planes that transversely intersect element 1. Each of said cylindrical housing 4 is provided with a corresponding slit 2 extending in the respective intersecting plane and over the whole length of said housings 4 to bring said housing into communication with the elements outer surface 3. Said housings are adapted to receive corresponding counter-shaped tubular elements T generally constituting boat handrails and which are engaged therewith by a restrained coupling described below.

Element 1 also comprises a second series of first housings or sets of three cylindrical housings 4a and slits 2a similar to the first ones, that extend through the element along chords lying in planes that intersect the element obliquely; more particularly, as shown in Fig. 3, the two triads are disposed symmetrically with respect to a transverse plane dividing the element centrally and in each triad housings are parallel to each other.

Element 1 also comprises a pair of second cylindrical housings 5 and respective slits 5a similar in size to the preceding ones but which extend longitudinally over the whole length thereof and a further series of third cylindrical housings 6 and respective slits 6a disposed longitudinally too and diametrically opposed and separated by equal distance from the preceding ones.

The sectional dimensions of the second pairs of housings 5 and slits 5a are almost similar to those of the above mentioned housings 4 and 4a and respective slits 2 and 2a while the series of third housings 6 and slits 6a have bigger sizes, as shown in Fig. 2, so that they tightly engage countershaped projections 7 provided at the ends of element 1 or fender.

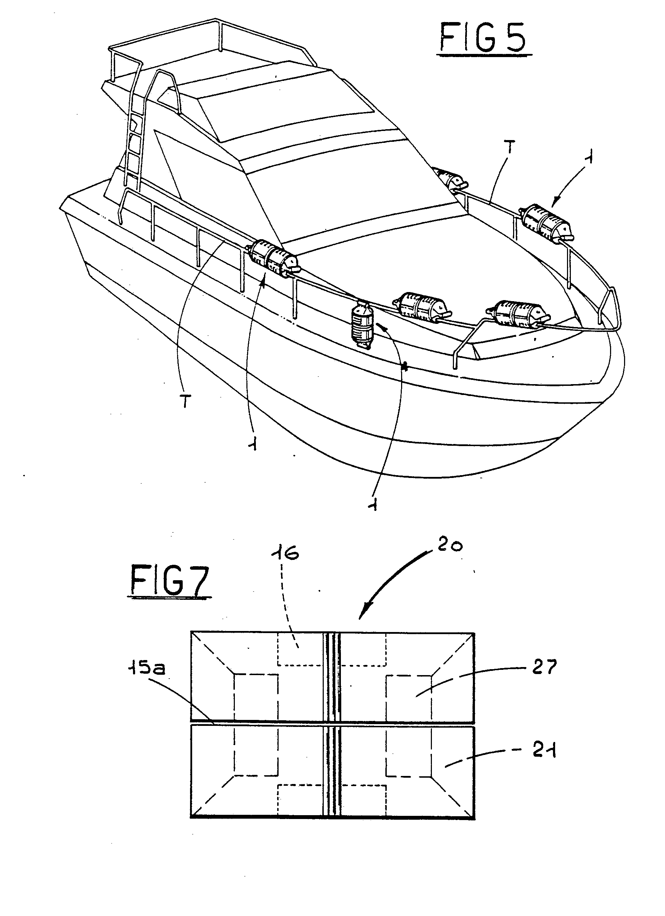

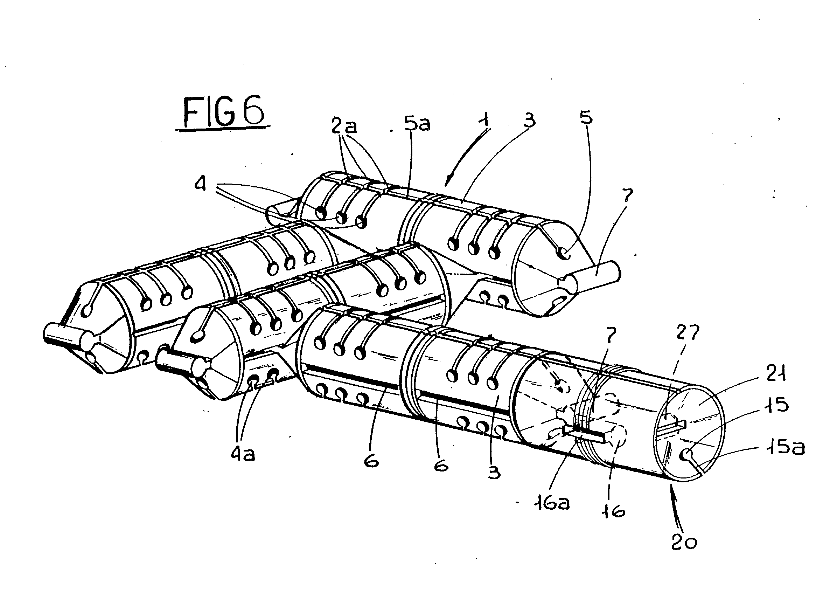

The use of the fender in question appears very clear from Figs. 5 and 6; in fact, owing to the presence of the longitudinal housings 5 and transverse housings 4 and 4a it is possible to secure the fender to the tubular element T of the boat's handrail, this operation being very simple and quick; in fact, it is sufficient to dispose the slit in the direction of the tubular element T and exert a pressure on the fender itself such that elastic deformation of the material (which may be integral polyurethane, for example) occurs, so that a tight engagement of said hand-rail element T with the inside of the respective fender housing 4, 4a, 5 is obtained.

The presence of differently oriented housings 4, 4a, 5 allows the fender to be fastened not only along horizontal or vertical tubular elements but also where the same cross each other so that the best fastening is obtained. The different orientation given to housings 4, 4a depends upon the different types of crossing exhibited by the handrails normally used which may be at right angles or at a certain angle, generally respecting the inclination given to housings 4a. If required, the latter might have different inclinations for each triad in order to best suit the corresponding inclinations of the handrails.

Fig. 6 shows how to join similar fenders to one another by means of a mutual coupling between projections 7 and housings 6; advantageously, a user in these conditions will be able to make up groups of fenders in the shape of cushions or mattresses which, on the one hand, reduce the possibility of scattering the single fenders and, on the other hand, might be used as life-buoys too, being that said fenders are made of a floating material.

Furthermore, said element 1 or fender, in use, could also take geometrical forms different from that shown (it could have a square section, for example); besides, said element 1 might be provided with a hole 11 either obtained in the vicinity of each projection 7 or disposed in the middle and longitudinally, allowing the free passage of a line. It will also be possible to envisage the construction of a coupling element 20 having transverse dimensions quite similar to those of said element 1, being however provided, at its opposite free ends, with recesses 21, 27 countershaped with respect to the conical and cylindrical projections 7 of element 1 (see Fig. 7). In this way, the "female" element could be engaged by means of a lengthwise coupling, with other "male" elements in order to obtain fenders having different axial dimensions, at will. The coupling element 20 may also be provided with housing and slits 15, 16, 15a, 16a similar to those possessed by said element 1.

Practically, the materials used as well as the shapes and sizes may be whatever according to the requirements.

## Claims

1. A fender comprising an elongated element (1) characterized in that the element (1) is provided with a first series of first cylindrical housings (4) that extend through the element along chords lying in planes that intersect the element (1), each of said housings being provided with a corresponding first slit (2) extending in the respective intersecting plane and over the whole length of the housing (4) to bring said housing into communication with the element's outer surface (3); said element (1) being also provided with at least a second cylindrical housing (5) which extends longitudinally of the element (1) over the whole length thereof and provided with a second slit (5a) extending to the element's outer surface over the whole length of said element.

2. A fender according to claim 1, characterized in that said element (1) is provided, at least at one end thereof, with a cylindrical projection (7) extending diametrically and in that it comprises at least a third longitudinal housing (6) extending parallelly to said second housing (5), provided with a third slit (6a), said projection (7) and third housing (6) being countershaped with respect to each other.

3. A fender according to claim 1, characterized in that said first series of first housings (4) and slits (2) lie in transverse planes intersecting element (1).

4. A fender according to claim 1, characterized in that it comprises a second series of first cylindrical housings (4a) and first slits (2a) similar to the first series and disposed diametrically opposed thereto, and extending along chords lying in oblique planes intersecting element (1).

5. A fender according to claim 4, characterized in that said second series of first housings (4a) and slits (2a) consists of groups of housings and slits that are disposed symmetrically with respect to a transverse plane dividing the element centrally.

6. A fender according to claims 1 and 4, characterized in that said first series comprises housings that are parallel to each other and said second series comprises a double plurality of housings and slits disposed symmetrically with respect to the transverse plane dividing the element centrally, the housings of each series being parallel to each other.

7. A fender according to claim 2, characterized in that it exhibits a pair of said second cylindrical housings (5) and respective slits (5a) diametrically opposed to each other and a pair of said third housings (6) and respective slits (6a) diametrically opposed and separated by equal distance from the preceding ones.

8. A fender according to claims 1 and 2, characterized in that said second housing (5) and slit (5a) and said third housing (6) and slit (6a) are of unequal dimensions.

9. A fender according to claims 1 and 8, characterized in that said third housing (6) and slit (6a) are bigger in size than said second housing (5) and slit (5a).

10. A fender according to claim 2, characterized in that the end opposed to said projection (7) exhibits a recess countershaped to said projection (7), adapted to be joined to the latter by a restrained coupling in order to obtain a train of fenders disposed longitudinally one after the other.

11. A fender according to claim 1 in combination with a coupling element (20) of substantially elongated cylindrical form, having transverse dimensions similar to the corresponding dimensions of said element (1) and provided, at its ends, with recesses (21, 27) countershaped with respect to said projections (7), adapted to be joined to the latter by a restrained coupling in order to obtain a train of fenders disposed longitudinally one after the other; said coupling element (20) being also provided with at least a second cylindrical housing (15) and slit (15a) similar to the corresponding housings and slits of the first element and extending over the whole length thereof.

12. A fender according to claim 11, characterized in that said coupling element (20) is provided with at least a third housing (16) and respective slit (16a) countershaped with respect to the projection (7) of said element (1), disposed longitudinally to said coupling element.

## Patentansprüche

1. Fender für Schiffe, enthaltend ein längliches Element (1), dadurch gekennzeichnet, dass das Element (1) mit einer ersten Serie von zylindrischen Sitzen (4) versehen ist, die sich durch das Element entlang von Sehnen erstrecken, welche in das Element (1) schneidenden Ebenen liegen, wobei jeder der genannten Sitze mit einem entsprechenden ersten Schlitz (2) versehen ist, der sich in der entsprechenden schneidenden Ebene und über die gesamte Länge des Sitzes (4) erstreckt, um den genannten Sitz mit der äusseren Oberfläche des Elementes in Verbindung zu bringen; und wobei das genannte Element (1) ebenfalls mit wenigstens einem zweiten zylindrischen Sitz (5) versehen ist, der sich in Längsrichtung des Elementes (1) und über die gesamte Länge desselben erstreckt und mit einem zweiten Schlitz (5a) versehen ist, welcher sich zu der ääusseren Oberfläche des Elementes hin und über die gesamte Länge des genannten Elementes erstreckt.

2. Fender nach Patentanspruch 1, dadurch gekennzeichnet, dass das genannte Element (1) an wenigstens einem seiner Enden mit einem zylindrischen Vorsprung (7) versehen ist, der sich diametral erstreckt, und dadurch, dass er wenigstens einen dritten längsverlaufenden Sitz (6) enthält, der sich parallel zu dem genannten zweiten Sitz (5) erstreckt und mit einem dritten Schlitz (6a) versehen ist, wobei der genannte Vorsprung (7) und der dritte Sitz (6) im Verhältnis zueinander gegengeformt sind.

3. Fender nach Patentanspruch 1, dadurch gekennzeichnet, dass die genannte erste Serie von ersten Sitzen (4) und Schlitzen (2) in querverlaufenden, das Element (1) schneidenden Ebenen liegen.

4. Fender nach Patentanspruch 1, dadurch gekennzeichnet, dass er eine zweite Serie von ersten zylindrischen Sitzen (4a) und ersten Schlitzen (2a) aufweist, und zwar ähnlich der ersten Serie und diametral entgegengesetzt zu dieser angeordnet und sich entlang von Sehnen erstreckend, die in schrägen und das Element (1) schneidenden Ebenen liegen.

5. Fender nach Patentanspruch 4, dadurch gekennzeichnet, dass die genannte zweite Serie von ersten Sitzen (4a) und Schlitzen (2a) aus einer Gruppe von Sitzen und Schlitzen besteht, die symmetrisch im Verhältnis zu einer querverlaufenden Ebene angeordnet sind, die das Element in der Mitte teilt.

6. Fender nach den Patentansprüchen 1 und 4, dadurch gekennzeichnet, dass die genannte erste Serie Sitze enthält, die parallel zueinander ausgerichtet sind, und dass die genannte zweite Serie eine doppelte Anzahl von Sitzen und Schlitzen enthält, die symmetrisch im Verhältnis zu der querverlaufenden Ebene, die das Element in der Mitte teilt, angeordnet sind, wobei die Sitze einer jeden Serie parallel zueinander liegen.

7. Fender nach Patentanspruch 2, dadurch gekennzeichnet, dass er ein Paar der genannten zweiten zylindrischen Sitze (5) und entsprechenden Schlitzen (5a) aufweist, die diametral entgegengesetzt zueinander liegen, sowie ein Paar der genannten dritten Sitze (6) und entsprechende Schlitze (7), sich einander diametral gegenüberliegend und im gleichen Abstand von den vorstehenden angeordnet.

8. Fender nach den Patentansprüchen 1 und 2, dadurch gekennzeichnet, dass die genannten zweiten Sitze (5) und Schlitze (5a) und die genannten dritten Sitze (6) und Schlitze (6a) nicht die gleichen Abmessungen haben.

9. Fender nach den Patentansprüchen 1 und 8, dadurch gekennzeichnet, dass die genannten dritten Sitze (6) und Schlitze (6a) in ihren Abmessungen grösser sind als als die genannten zweiten Sitze (5) und Schlitze (5a).

10. Fender nach Patentanspruch 2, dadurch gekennzeichnet, dass das demgenannten Vorsprung (7) engegengesetzt liegende Ende eine dem genannten Vorsprung (7) gegengeformte Vertiefung aufweist, die geeignet ist, letzteren in einer festen Verbindung aufzunehmen, um eine Kette von Fendern zu erhalten, die der Länge nach einer nach dem anderen angeordnet sind.

11. Fender nach Patentanspruch 1 in Kombination mit einem Verbindungselement (20) von grundsätzlich verlängerter zylindrischer Form, welches ähnliche Querabmessungen hat wie die entsprechenden Abmessungen des genannten Elementes (1) und an seinen Enden mit Vertiefungen (21, 27) versehen ist, die entsprechend zu dem genannten Vorsprung (7) gegengeformt und geeignet sind, letzteren in einer festen Verbindung aufzunehmen, um eine Kette von Fendern zu erhalten, die der Länge nach einer nach dem anderen angeordnet sind, wobei das genannte Verbindungselement (20) ebenfalls wenigstens mit einem zweiten zylindrischen Sitz (15) und Schlitz (15a) ähnlich den entsprechenden Sitzen und Schlitzen des ersten Elementes versehen ist, welcher sich über die gesamte Länge desselben erstreckt.

12. Fender nach Patentanspruch 11, dadurch gekennzeichnet, dass das genannte Verbindungselement (20) mit wenigstens einem dritten Sitz (16) und entsprechenden Schlitz (16a) versehen ist, der entsprechend zu dem Vorsprung (7) des genannten Elementes (1) gegengeformt und längs zu dem genannten Verbindungselement angeordnet ist.

**Revendications**

1. Défense pour navires comportant un élément allongé (1), caractérisée en ce que ledit élément (1) est pourvu d'une première série de premiers logements cylindriques (4) s'étendant à travres l'élément le long de cordes contenues dans des plans entrecoupant l'élément (1), chacun desdits logements (4) étant pourvu d'une première fente correspondante (2) s'étendant dans le respectif plan d'intersection et sur toute la longueur du logement (4) de manière à porter le logement lui-même en communication avec la surface extérieure (3) de l'élément (1); ledit élément (1) étant également pourvu d'au moins un deuxième logement cylindrique (5) s'étendant longitudinalement audit élément (1) et sur toute sa longueur et pourvu d'une deuxième fente (5a) s'étendant vers la surface extérieure de l'élément (1) sur toute la longueur de ce dernier.

2. Défense selon la revendication 1, caractérisée en ce que ledit élément (1) est pourvu, au moins à l'une de ses extrémités, d'une saillie cylindrique (7) s'étendant diamétralement et en ce qu'il comporte au moins un troisième logement longitudinal (6) s'étendant parallèlement audit deuxième logement (5), pourvu d'une troisième fente (6a), lesdits saillie (7) et troisième logement (6) étant de forme complémentaire l'une par rapport à l'autre.

3. Défense selon la revendication 1, caractérisée en ce que ladite première série de premiers logements (4) et fentes (2) est située dans des planes transversaux entrecoupant l'élément (1).

4. Défense selon la revendication 1, caractérisée en ce qu'elle comporte une deuxième série de premiers logements cylindriques (4a) et fentes (2a) égale à la première série et disposée diamétralement opposée à celle-ci, s'étendant selon des cordes contenues dans des plans obliques entrecoupant l'élément (1).

5. Défense selon la revendication 4, caractérisée en ce que ladite deuxième série de premiers logements (4a) et fentes (2a) comporte des groupes de logements et fentes qui sont disposés symétriquement par rapport à un plan transversal divisant l'élément au centre.

6. Défense selon les revendications 1 et 4, caractérisée en ce que ladite première série comporte des logements qui sont parallèles entre eux et ladite deuxième série comporte une double pluralité de logements et de fentes disposés symétriquement par rapport au plan transversal divisant l'élément au centre, les logements de chaque série étant parallèles entre eux.

7. Défense selon la revendication 2, caractérisée en ce qu'elle présente un couple de deuxièmes logements cylindriques (5) et fentes respectives (5a) diamétralement opposés l'un à l'autre et un couple de troisièmes logements (6) et fentes respectives (6a) diamétralement opposés l'un à l'autre et séparés d'une égale distance des précédents.

8. Défense selon les revendications 1 et 2, caractérisée en ce que ledit deuxième logement (5) et fente (5a) et ledit troisième logement (6) et fente (6a) sont de dimensions inégales.

9. Défense selon les revendications 1 et 8, caractérisée en ce que lesdits troisième logement (6) et fente (6a) sont plus larges que lesdits deuxième logement (5) et fente (5a).

10. Défense selon la revendication 2, caractérisée en ce que l'extrémité opposée à ladite saillie (7) est pourvue d'un enfoncement épousant la forme de la saillie (7) et destiné à recevoir cette dernière par emboîtement de manière à obtenir un train de défenses disposées longitudinalement l'une derrière l'autre.

11. Défense selon la revendication 1 en combinaison avec un élément d'accouplement (20) de forme sensiblement cylindrique allongée, ayant des dimensions transversales égales aux dimensions correspondantes dudit élément (1) et pourvu, à ses extrémités, d'enfoncements (21, 27) épousant la forme desdites saillies (7) et destinés à recevoir ces dernières par emboîtement de manière à obtenir un train de défenses disposées longitudinalement l'une derrière l'autre; ledit élément d'accouplement (20) étant également pourvu au moins d'un deuxième logement cylindrique (15) et fente (15a) égaux aux logements et fentes correspondants de l'élément allongé et s'étendant sur toute sa longueur.

12. Défense selon la revendication 11, caractérisée en ce que ledit élément d'accouplement (20) est pourvu d'au moins un troisième logement (16) et fente respective (16a) épousant la forme de la saillie (7) dudit élément (1) et disposés longitudinalement audit élément d'accouplement.

0 150 684

FIG1

FIG2

FIG3

FIG4

0 150 684

## FIG 5

## FIG 7

2

FIG 6

0 150 684